# EUROPEAN PATENT APPLICATION

(11) **EP 1 366 948 A1**
(43) Date of publication of application: **03.12.2003**
(21) Application number: 03012361.6
(22) Date of filing: 30.05.2003
(51) Int. Cl.: B60L 11/18, H02M 3/28, B60L 11/00, H02M 3/158, H02J 7/00

(54) **Hybrid power supply system**

(30) Priority: 30.05.2002 JP 2002156757
(71) Applicant: Nec Tokin Corporation, Sendai-shi, Miyagi (JP)
(72) Inventor: Takahashi, Shingo, c/o Nec Tokin Corporation, Sendai-shi, Miyagi (JP); Mori, Kazuya, c/o Nec Tokin Corporation, Sendai-shi, Miyagi (JP); Hasebe, Akio, c/o Nec Tokin Corporation, Sendai-shi, Miyagi (JP)
(74) Representative: Hofer, Dorothea, Dipl.-Phys.

(57) **Abstract**

In a hybrid power supply system which includes an electric double layer capacitor (10) having a pair of capacitor terminals (11 and 12), an energy storage (70a), and first and second bidirectional DC/DC converters (30a and 30b), the above-mentioned pair of capacitor terminals of the electric double layer capacitor are connected to a load (60a) through the first bidirectional DC/DC converter and are connected to the energy storage through the second bidirectional DC/DC converter.

## Description

This invention claims priority to prior Japanese patent application JP 2002-156757, the disclosure of which is incorporated herein by reference.

### Background of the Invention:

This invention relates to a hybrid power supply system comprising a load (which is also operable as a power generator), an energy storage, a bidirectional DC/DC converter (that is, a bidirectional DC (Direct Current)-to-DC (Direct Current) converter).

In recent years, attempts have increasingly been made to achieve a hybrid power supply adaptable to drastic load variation and having a regenerative energy recovery function by combining a secondary battery capable of producing a stable output power and an electric double layer capacitor excellent in large-current charge/discharge characteristics. However, merely by connecting the electric double layer capacitor and the secondary battery, it is impossible to extract the energy stored in the electric double layer capacitor. In order to extract the energy, it is required to provide an additional circuit.

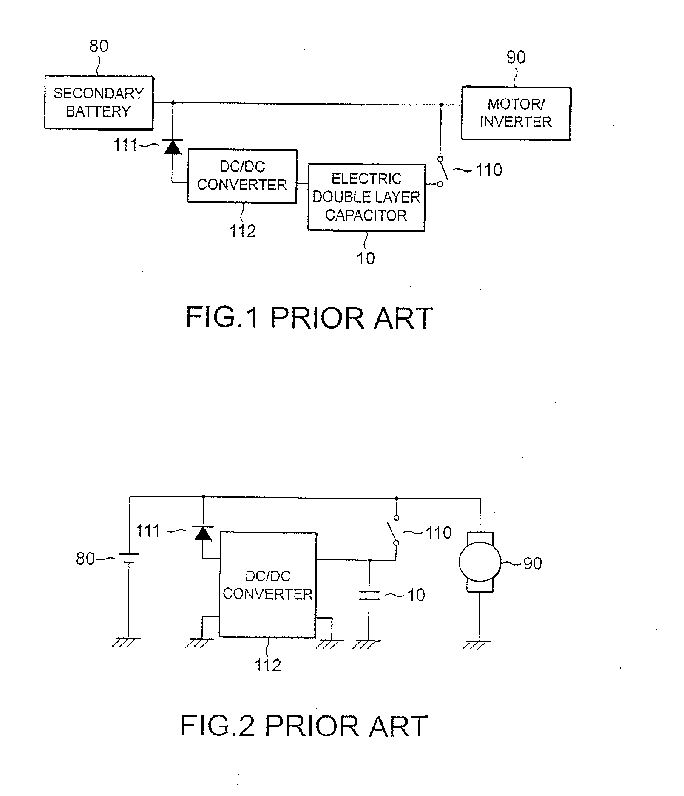

Referring to Fig. 1, a conventional power supply system having a regenerative energy recovery function will be described. Fig. 2 shows a circuit diagram of the power supply system illustrated in Fig. 1 The power supply system illustrated in Figs. 1 and 2 is disclosed in Japanese Unexamined Patent Publication No. 2000-253503 (JP 2000-253503 A) as a regenerative energy recovery apparatus for an electric vehicle. The power supply system comprises a secondary battery 80 as an energy storage, an electric double layer capacitor 10, and a DC/DC converter 112 inserted between the secondary battery 80 and the electric double layer capacitor 10. In a normal running condition, a motor/inverter 90 (which is operable as a load) is driven by the secondary battery 80. In a braking condition, energy produced by the motor/inverter 90 (which serves as a power generator in this event) is stored in the electric double layer capacitor 10. The energy stored in the electric double layer capacitor 10 is supplied to the secondary battery 80 through the DC/DC converter 112 and a rectifying element (diode) 111 to charge the secondary battery 80. With the above-mentioned system, the energy recovery efficiency in the braking condition is improved.

However, the energy recovered as mentioned above ís returned to the secondary battery and then used In a situation where the energy is used, for example, during acceleration, the secondary battery discharges a large current. This results in rapid deterioration of the secondary battery and occurrence of loss due to internal resistance.

In the above-mentioned power supply system comprising the secondary battery, the electric double layer capacitor, and the motor as a power generator, it is most desirable to supply electric power to the motor as a load from the secondary battery when stable electric power is required and from the electric double layer capacitor when large electric power is required. In this manner, it is possible to fully exhibit respective characteristics of the secondary battery and the electric double layer capacitor. It is a major problem to establish a system capable of achieving such high-efficiency energy management.

The above also applies to a power supply system using an energy storage other than the secondary. In order to establish a power supply system adaptable to drastic load variation and capable of providing stable output power, it is an important problem to achieve a hybrid system including the energy storage and the electric double layer capacitor.

A bidirectional DC-DC converter is disclosed in Japanese Unexamined Patent Publication No. 2000-333445 (JP 2000-333445 A).

Another bidirectional DC/DC converter is disclosed as a bidirectional step-up and step-down chopper circuit in Japanese Unexamined Patent Publication No. 2001-268900 (JP 2001-268900 A).

### Summary of the Invention:

It is an object of this invention to achieve a hybrid power supply system capable of achieving high-efficiency energy management.

Hybrid power supply systems according to this invention are as follows:
1) A hybrid power supply system comprising: an electric double layer capacitor (10) having a pair of capacitor terminals (11 and 12), an energy storage (70a), and first and second bidirectional DC/DC converters (30a and 30b), wherein the pair of capacitor terminals of the electric double layer capacitor are connected to a load (60a) through the first bidirectional DC/DC converter and are connected to the energy storage through the second bidirectional DC/DC converter.
2) A hybrid power supply system as described in the above-mentioned paragraph 1), wherein at least one of the first and the second bidirectional DC/DC converters is a symmetrical DC/DC converter which comprises an inductor (31) having a pair of inductor terminals and a pair of switching portions (32 and 33) connected to the pair of inductor terminals to be symmetrical with each other with respect to the inductor, the symmetrical DC/DC converter being operable as every one of a step-up converter and a step-down converter when a particular one and a remaining one of the pair of switching portions serve as an input switch and an output switch, respectively, the symmetrical DC/DC converter being also operable as every one of the step-up converter and the step-down converter when the particular one and the remaining one of the pair of switching portions conversely serve as the output switch and the input switch, respectively,
3) A hybrid power supply system as described in the above-mentioned paragraph 1), wherein the load comprises a power generator (90).
4) A hybrid power supply system as described in the above-mentioned paragraph 1), wherein the energy storage comprises a secondary battery (80).
5) A hybrid power supply system as described in the above-mentioned paragraph 1), wherein the electric double layer capacitor comprises a plurality of electric double layer capacitors (10') connected in series, the system further comprising a voltage balancing unit (20) for balancing respective voltages of the plurality of electric double layer capacitors connected in series.
6) A hybrid power supply system as described in the above-mentioned paragraph 1), further comprising: an additional energy storage (70b) and an additional bidirectional DC/DC converter (30b'), the pair of capacitor terminals of the electric double layer capacitor are also connected to the additional energy storage through the additional DC/DC converter.
7) A hybrid power supply system as described in the above-mentioned paragraph 1), further comprising: an additional bidirectional DC/DC converter (30a'), the pair of capacitor terminals of the electric double layer capacitor are also connected to an additional load (60b) through the additional DC/DC converter.

### Brief Description of the Drawing:

Fig. 1 is a block diagram of a conventional power supply system having a regenerative energy recovery function;
Fig. 2 is a circuit diagram of the power supply system illustrated in Fig. 1;
Fig. 3 is a block diagram of a hybrid power supply system according to a first embodiment of this invention;
Fig. 4 is a circuit diagram of the hybrid power supply system illustrated in Fig. 3;
Fig. 5 is a block diagram of a hybrid power supply system according to a second embodiment of this invention;
Fig. 6 is a circuit diagram of the hybrid power supply system illustrated in Fig. 5;
Fig. 7 is a block diagram of an electric double layer capacitor and a voltage balancing unit which are used in the hybrid power supply system illustrated in Fig. 5;
Fig. 8 is a block diagram of a hybrid power supply system according to a third embodiment of this invention;
Fig. 9 is a circuit diagram of the hybrid power supply system illustrated in Fig. 8;
Fig. 10 is a block diagram of a hybrid power supply system according to a fourth embodiment of this invention;
Fig. 11 is a circuit diagram of the hybrid power supply system illustrated in Fig. 10; and
Fig. 12 is a block diagram of a symmetrical DC/DC converter which may be used as each of bidirectional DC/DC converters in the hybrid power supply systems illustrated in Figs. 3, 4, 5, 6, 8, 9, 10, and 11.

### Description of the Preferred Embodiments:

According to this invention which will presently be described, there is provided a hybrid power supply system including an electric double layer capacitor, an energy storage, and first and second bidirectional DC/DC converters, the first bidirectional DC/DC converter connecting a load and the electric double layer capacitor, the second bidirectional DC/DC converter connecting the energy storage and the electric double layer capacitor, the hybrid power supply system being operable in the manner such that the electric double layer capacitor supplies energy to the load through the first bidirectional DC/DC converter to assist the energy storage when a larger current is required due to load variation and that, in a normal condition, the energy stored in the electric double layer capacitor is supplied to the energy storage through the second bidirectional DC/DC converter to be stored in the energy storage. With this structure, the hybrid power supply system is excellent in energy usability.

Preferably, at least one of the first and the second bidirectional DC/DC converters is a symmetrical DC/DC converter which includes an inductor having a pair of inductor terminals and a pair of switching portions connected to the pair of inductor terminals to be symmetrical with each other with respect to the inductor. The symmetrical DC/DC converter is operable as every one of a step-up converter and a step-down converter when a particular one and a remaining one of the pair of switching portions serve as an input switch and an output switch, respectively. The symmetrical DC/DC converter is also operable as every one of the step-up converter and the step-down converter when the particular one and the remaining one of the pair of switching portions conversely serve as the output switch and the input switch, respectively. With this structure, the hybrid power supply system is improved in degree of freedom in design and high in versatility.

Preferably, in case where regenerative energy recovery is carried out by using a load as a power generator, electric energy produced by the load is supplied as regenerative energy to the electric double layer capacitor through the first bidirectional DC/DC converter. With this structure, the hybrid power supply system is improved in energy recovery rate and in energy usability.

Preferably, a secondary battery is used as the energy storage. With this structure, the regenerative energy stored in the electric double layer capacitor is efficiently supplied to the secondary battery through the second bidirectional DC/DC converter. Thus, the hybrid power supply system is high in versatility.

The hybrid power supply system may include a plurality of electric double layer capacitors connected in series. In this case, the hybrid power supply system further includes a low-loss voltage balancing (or equalizing) apparatus for balancing (or equalizing) voltages of the electric double layer capacitors. With this structure, the hybrid power supply system can utilize the performance of the electric double layer capacitor to the full extent.

According to this invention, there is also provided a hybrid power supply system including an electric double layer capacitor, a plurality of energy storages, and a plurality of bidirectional DC/DC converters, the electric double layer capacitor being connected to the energy storages through the bidirectional DC/DC converters different from one another, respectively, and to a plurality of loads through the bidirectional DC/DC converters different from one another, respectively. With this structure, it is possible to freely distribute the amount of energy to be stored in the energy storages and to freely distribute the energy to be used.

Now, hybrid power supply systems according to several embodiments of this invention will be described with reference to the drawing.

### First Embodiment

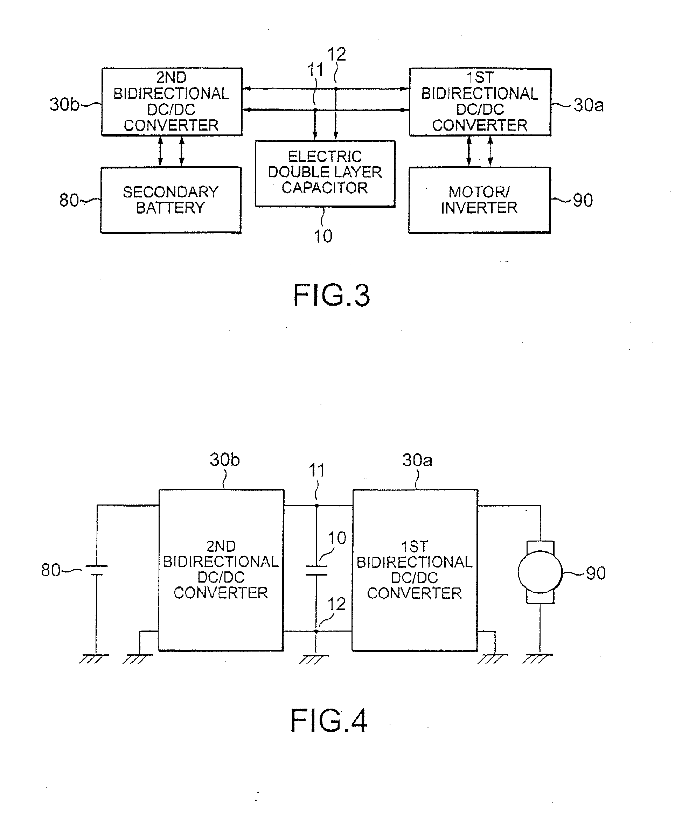

At first referring to Fig. 3, a hybrid power supply system according to a first embodiment of this invention will be described. Fig, 4 shows a circuit diagram of the hybrid power supply system illustrated in Fig. 3. In Figs. 3 and 4, the hybrid power supply system is applied to a regenerative energy recovery system of an electric vehicle. The hybrid power supply system includes an electric double layer capacitor 10 having a pair of capacitor terminals 11 and 12, first and second bidirectional DC/DC converters 30a and 30b, a secondary battery 80 as an energy storage, and a motor/inverter 90 as a load. More specifically, the pair of capacitor terminals 11 and 12 of the electric double layer capacitor 10 are connected to the motor/inverter (the load) 90 through the first bidirectional DC/DC converter 30a and are connected to the secondary battery (the energy storage) 80 through the second bidirectional DC/DC converter 30b.

The first bidirectional DC/DC converter 30a controls the motor/inverter 90. At a start and during acceleration when a large current is required, the second bidirectional DC/DC converter 30b controls an output power of the electric double layer capacitor 10 and electric power is supplied from both of the electric double layer capacitor 10 and the secondary battery 80 to the motor/inverter 90.

Hereinafter, the first bidirectional DC/DC converter 30a is defined as a driving/regenerative bidirectional DC/DC converter while the second bidirectional DC/DC converter 30b is defined as a charging/discharging bidirectional DC/DC converter.

During deceleration, the motor/inverter 90 is used as a power generator. Electric energy produced by the motorlinverter 90 is converted by the first bidirectional DC/DC converter 30a into electric energy having a voltage corresponding to the specification of the electric double layer capacitor 10. Then, the electric energy is charged to the electric double layer capacitor 10. On the other hand, in a normal running condition, the energy is supplied from the secondary battery 80 to the motor/inverter 90. In case where the energy in the secondary battery 80 is decreased to some extent, the electric double layer capacitor 10 charges the secondary battery 80 through the second bidirectional DC/DC converter 30b. In case where the energy in the electric double layer capacitor 10 is decreased, the secondary battery 80 supplies supplemental energy to the electric double layer capacitor 10 through the second bidirectional DC/DC converter 30b.

With this structure, it is possible to freely transfer any desired amount of energy among the secondary battery, the capacitor, and the motor from a desired one to another, irrespective of a voltage level of each of these devices.

### Second Embodiment

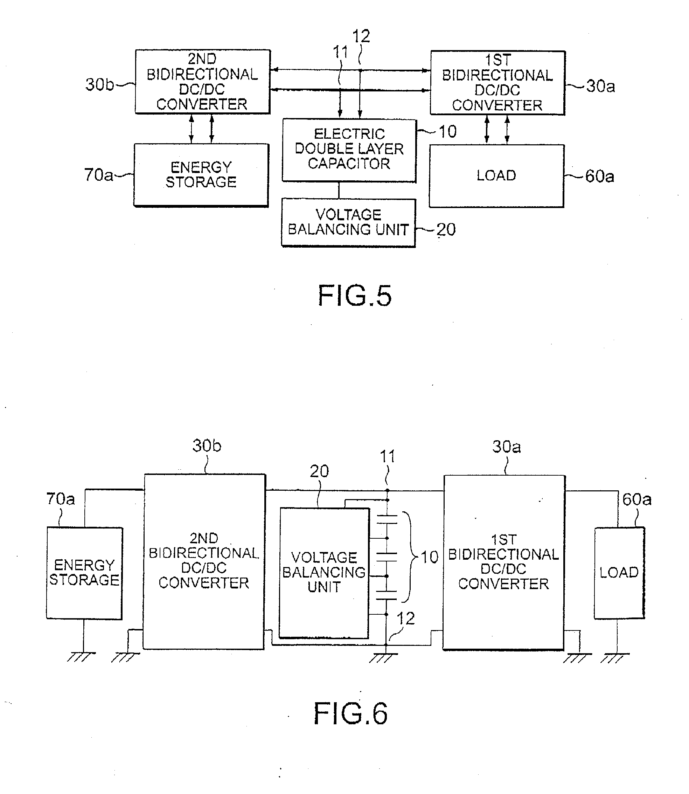

Referring to Fig. 5, a hybrid power supply system according to a second embodiment of this invention includes an energy storage 70a and a load 60a. The hybrid power supply system further includes a voltage balancing unit 20. Fig. 6 shows a circuit diagram of the hybrid power supply system illustrated in Fig. 5.

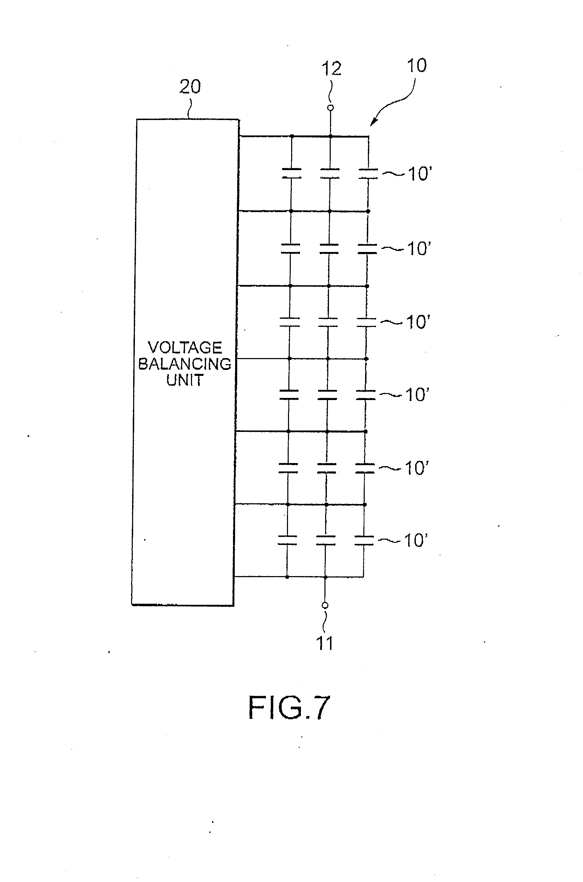

Referring to Fig. 7, illustration is made of a combination of the electric double layer capacitor 10 and the voltage balancing unit 20 which are used in the hybrid power supply system illustrated in Figs. 5 and 6.

In Figs. 5, 6, and 7, the electric double layer capacitor 10 includes a plurality of electric double layer capacitors 10' connected in series and in parallel. The voltage balancing unit 20 is for balancing respective voltages of the plurality of electric double layer capacitors connected in series and in parallel.

Inasmuch as the electric double layer capacitors 10', which are connected in series in the manner illustrated in Fig. 7, are different in self-discharge characteristic from one another, voltages gradually become nonuniform and the energy density of the electric double layer capacitor 10 is lowered when charging/discharging operations are repeated. Therefore, in order to maintain the energy density of the electric double layer capacitor 10, the voltage balancing unit 20 is operated at an appropriate timing to level the voltages of the electric double layer capacitors 10'. The voltage balancing can be carried out in various manners, for example, by the use of a constant voltage element such as a Zener diode, by switching series-parallel connection, and by transferring the energy between the electric double layer capacitors (see Japanese Unexamined Patent Publication No. 2001-136660 (JP 2001-136660 A) and see EP1198050A1).

### Third Embodiment

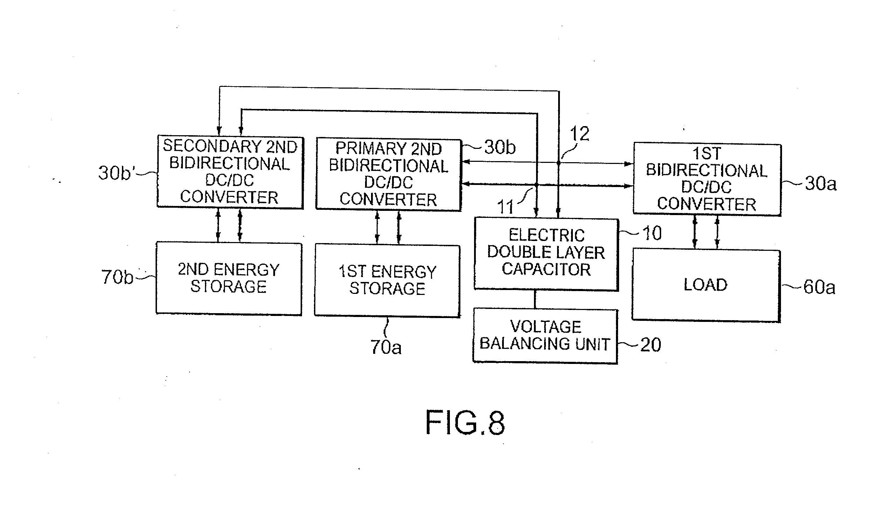

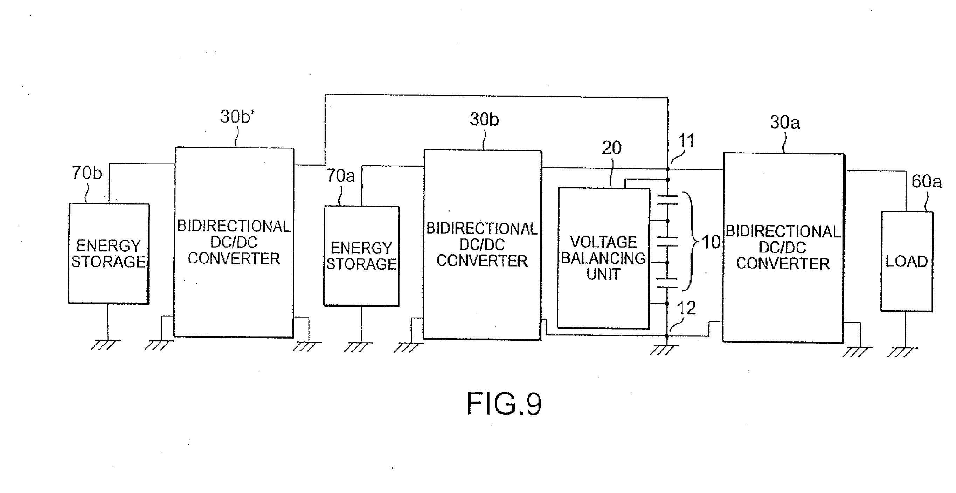

Referring to Fig. 8, a hybrid power supply system according to a third embodiment of this invention includes first and second energy storages 70a and 70b connected to the electric double layer capacitor 10 through a primary second bidirectional DC/DC converter 30b and a secondary second bidirectional DC/DC converter 30b', respectively. Fig. 9 shows a circuit diagram of the hybrid power supply system illustrated in Fig. 8. In Figs. 8 and 9, the primary and the secondary bidirectional DC/DC converters 30b and 30b' may be of the same type or different from each other. The number of the energy storages may be any desired number.

### Fourth Embodiment

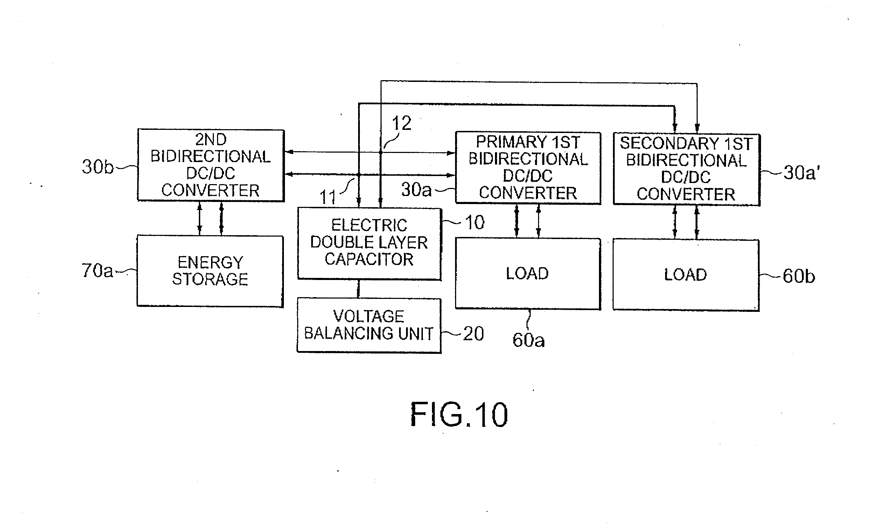

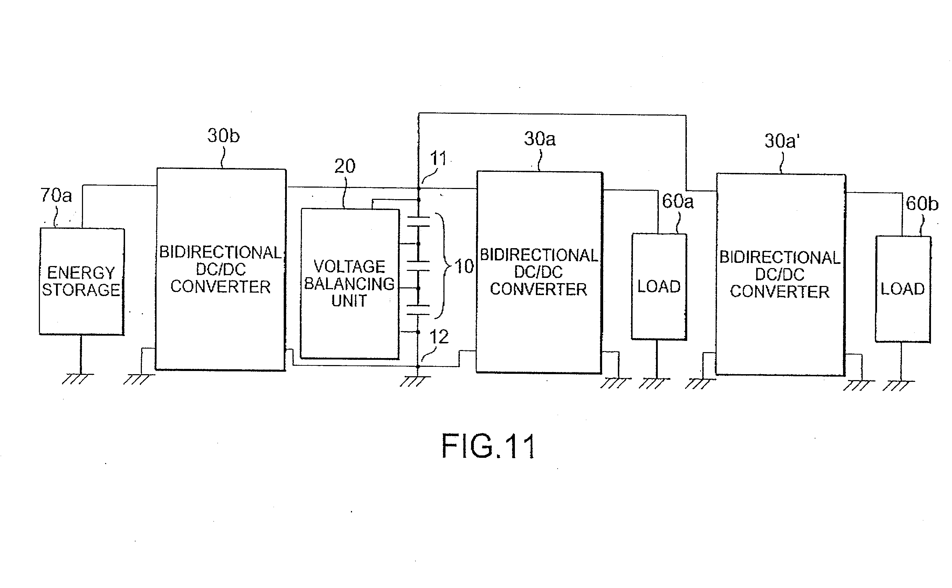

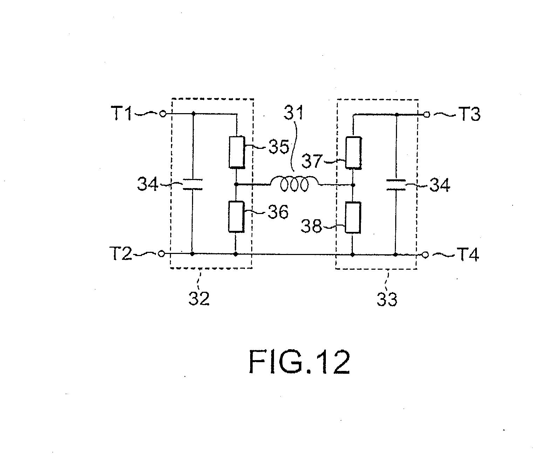

Referring to Fig. 10, a hybrid power supply system according to a fourth embodiment of this invention includes a plurality of loads 60a and 60b connected to the electric double layer capacitor 10 through a primary first bidirectional DC/DC converter 30a and a secondary first bidirectional DC/DC converter 30a', respectively. Fig. 11 shows a circuit diagram of the hybrid power supply system illustrated in Fig. 10. In Figs. 11 and 12, the loads 60a and 60b connected to the electric double layer capacitor 10 may be of the same type or different from each other. The number of the loads may be any desired number. Generally, the energy storage is not restricted to the secondary battery but may be any device, such as a fly wheel, which can be charged and discharged. Similarly, the load is not restricted to the motor but may be of any type.

As each of the bidirectional DC/DC converters 30a, 30a', 30b, and 30b'illustrated in Figs. Figs. 3, 4, 5, 6, 8, 9_{,} 10, and 11, use may be made of a symmetrical DC/DC converter which is a bidirectional DC/DC converter capable of freely controlling voltage step-up and step-down operations and which is illustrated in Fig. 12.

The symmetrical DC/DC converter is proposed in Japanese Patent Application No. 2001-369532 (Date of filing: December 4, 2001) and is disclosed in Japanese Unexamined Patent Publication No. 2002-238250 (JP 2002-238250 A) (Date of publication: August 23, 2002). The symmetrical DC/DC converter is also disclosed in EP 1211791 A1 (Date of publication: June 5, 2002) (Date of filing: December 4, 2001).

In Fig. 12, the symmetrical DC/DC converter includes an inductor 31 having a pair of inductor terminals and a pair of switching portions 32 and 33 connected to the pair of inductor terminals to be symmetrical with each other with respect to the inductor 31. The symmetrical DC/DC converter is operable as every one of a step-up converter and a step-down converter when a particular one and a remaining one of the pair of switching portions 32 and 33 serve as an input switch and an output switch, respectively. The symmetrical DC/DC converter is also operable as every one of the step-up converter and the step-down converter when the particular one and the remaining one of the pair of switching portions 32 and 33 conversely serve as the output switch and the input switch, respectively,

More specifically, the symmetrical DC/DC converter includes the inductor 31, first and second switching portions35 and 36 having one ends connected to one end of the inductor 31, third and fourth switching portions 37 and 38 having one ends connected to the other end of the inductor 31, first through fourth terminals T1, T2, T3, and T4 connected to the other ends of the first through the fourth switching portions 35, 36, 37, and 38, respectively, and a pair of capacitors 34 connected between the first and the second terminals T1 and T2 and between the third and the fourth terminals T3 and T4, respectively. The second and the fourth terminals T2 and T4 are connected to each other.

Table 1 shows the states of the first through the fourth switching portions 35, 36, 37, and 38 in case where the first and the second terminals T1 and T2 are used as input terminals while the third and the fourth terminals T3 and T4 are used as output terminals and in case where the first and the second terminals T1 and T2 are used as output terminals while the third and the fourth terminals T3 and T4 are used as input terminals. For each case, the step-up operation and the step-down operation are shown.

**Table 1**

| 1st, 2nd Terminals | 3^{r}d, 4th Terminals | | 35 | 36 | 37 | 38 |
|---|---|---|---|---|---|---|
| Input | Output | Step-up | ON | OFF | D | SW |
| | | Step-down | SW | D | ON | OFF |
| Output | Input | Step-up | D | SW | ON | OFF |
| | | Step-down | ON | OFF | SW | D |

In Table 1, "ON" and "OFF" represent a short-circuited or a closed state and an opened state, respectively. "SW" is a controlled state where ON/OFF is intermittently switched under PWM control or the like so that an appropriate step-up or a step-down ratio is obtained. "D" represents a rectifying state of performing a rectifying operation.

Thus, the symmetrical DC/DC converter is operable as every one of the step-up converter and the step-down converter when a particular one and a remaining one of the pair of switching portions 32 and 33 serve as the input switch and the output switch, respectively. The symmetrical DC/DC converter is also operable as every one of the step-up converter and the step-down converter when the particular one and the remaining one of the pair of switching portions 32 and 33 conversely serve as the output switch and the input switch, respectively,

By the use of the symmetrical DC/DC converter which is a bidirectional DC/DC converter capable of freely controlling voltage step-up and step-down operations and which is illustrated in Fig. 12, the electric double layer capacitor 10 more efficiently absorbs the energy and the energy can be extracted at a desired voltage during discharging. Thus, it is possible to improve the degree of freedom in design of the hybrid power supply system and the versatility.

For example, it is assumed that the hybrid power supply system of this invention is applied to a hybrid vehicle. In the past, the scale or the capacity of the secondary battery is determined in dependence upon the maximum output power of the motor. According to this invention, the electric double layer capacitor can provide the supplemental energy required for the maximum output power of the motor As a consequence, it is sufficient for the secondary battery to provide the energy required for electrical components and normal running. Therefore, it is possible to achieve the performance equivalent or superior to that presently attained and to reduce the size. Therefore, not only the energy usability but also the transportation efficiency is improved. Since large current charging/discharging operations are carried out by the electric double layer capacitor, the secondary battery as the energy storage is extended in lifetime.

According to this invention, it is possible to establish a hybrid power supply system small in size, light in weight, long in lifetime, and high in energy usability and having a performance substantially equivalent to that of the conventional power supply system. If the hybrid power supply system of this invention is applied to a transportation equipment such as an electric vehicle, the transportation efficiency is considerably improved.

## Claims

1. A hybrid power supply system comprising: an electric double layer capacitor (10) having a pair of capacitor terminals (11 and 12), an energy storage (70a, 80), and first and second bidirectional DC/DC converters (30a and 30b), wherein said pair of capacitor terminals of the electric double layer capacitor are connected to a load (60a) through said first bidirectional DC/DC converter and are connected to said energy storage through said second bidirectional DC/DC converter.

2. A hybrid power supply system as claimed in claim 1, wherein at least one of said first and said second bidirectional DC/DC converters is a symmetrical DC/DC converter which comprises an inductor (31) having a pair of inductor terminals and a pair of switching portions (32 and 33) connected to said pair of inductor terminals to be symmetrical with each other with respect to said inductor, said symmetrical DC/DC converter being operable as every one of a step-up converter and a step-down converter when a particular one and a remaining one of said pair of switching portions serve as an input switch and an output switch, respectively, said symmetrical DC/DC converter being also operable as every one of said step-up converter and said step-down converter when said particular one and said remaining one of the pair of switching portions conversely serve as said output switch and said input switch, respectively.

3. A hybrid power supply system as claimed in claims 1 or 2, wherein said load comprises a power generator (90).

4. A hybrid power supply system as claimed in any one of claims 1 to 3, wherein said energy storage comprises a secondary battery (80).

5. A hybrid power supply system as claimed in any one of claims 1 to 4, wherein said electric double layer capacitor comprises a plurality of electric double layer capacitors (10') connected in series, said system further comprising a voltage balancing unit (20) for balancing respective voltages of said plurality of electric double layer capacitors connected in series.

6. A hybrid power supply system as claimed in any one of claims 1 to 5, further comprising: an additional energy storage (70b) and an additional bidirectional DC/DC converter (30b'), said pair of capacitor terminals of the electric double layer capacitor are also connected to said additional energy storage through said additional DC/DC converter.

7. A hybrid power supply system as claimed in any one of claims 1 to 6, further comprising: an additional bidirectional DC/DC converter (30a'), said pair of capacitor terminals of the electric double layer capacitor are also connected to an additional load (60b) through said additional DC/DC converter.
